(19) Europäisches Patentamt
European Patent Office
Office européen des brevets

(11) EP 1 605 539 A2

(12) EUROPEAN PATENT APPLICATION

(43) Date of publication:
14.12.2005 Bulletin 2005/50

(51) Int Cl.⁷: H01M 8/04

(21) Application number: 05010895.0

(22) Date of filing: 19.05.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 10.06.2004 JP 2004172399

(71) Applicant: NISSAN MOTOR CO., LTD.
Yokohama-shi Kanagawa-ken (JP)

(72) Inventor: Itou, Yasuyuki
Yokohama-shi Kanagawa (JP)

(74) Representative: Grünecker, Kinkeldey,
Stockmair & Schwanhäusser Anwaltssozietät
Maximilianstrasse 58
80538 München (DE)

(54) Fuel cell system and method of controlling thereof

(57) The fuel cell system has: a fuel cell stack having a fuel electrode and an oxidant electrode that face each other with a electrolyte membrane interposed between the fuel electrode and the oxidant electrode; a gas supply unit configured to supply a fuel gas to the fuel electrode and an oxidant gas to the oxidant electrode; a fuel gas circulation unit configured to return a fuel gas discharged from an outlet of the fuel electrode to an inlet of the fuel electrode; a purge valve configured to discharge a gas outside from a circulation path connected between the outlet and the inlet of the fuel electrode; a temperature measuring unit configured to measure a temperature of the fuel gas; and a control unit configured to control, according to the temperature of the fuel gas and a variation in the fuel gas temperature, a flow rate of the gas to be discharged from the purge valve. The control unit increases the flow rate of the gas to be discharged if the variation in the fuel gas temperature is positive and decreases the flow rate of the gas to be discharged if the variation in the fuel gas temperature is negative.

FIG. 1

## Description

## BACKGROUND OF THE INVENTION

The present invention relates to a fuel cell system and a method of controlling thereof, and particularly, to a fuel cell system having a fuel gas circulation path to return a fuel gas discharged from an outlet of a fuel cell to an inlet of the fuel cell.

A fuel cell system produces an electrochemical reaction between hydrogen obtained by reforming a fuel gas such as a natural gas and oxygen contained in the atmosphere, to generate electricity directly from the electrochemical reaction. The fuel cell system can effectively use the chemical energy of the fuel gas and is environmentally friendly. Accordingly, techniques related to the fuel cell system are actively developed for actual use.

A fuel gas discharged from a fuel cell contains hydrogen that has not contributed to an electrochemical reaction. Such hydrogen must effectively be reused. For this, there is a fuel cell system having a fuel gas circulation path to return a fuel gas discharged from an outlet of a fuel cell to an inlet of the fuel.

During electricity generation, nitrogen produced at a cathode (oxidant electrode) of a fuel cell diffuses through an electrolyte membrane to an anode (fuel electrode), to increase a nitrogen concentration around the fuel electrode. This results in decreasing a partial pressure of hydrogen in a fuel gas and deteriorating an electricity generation efficiency. To avoid this, a purge valve is arranged and is opened to partly discharge the fuel gas from a fuel gas circulation path so that impurities such as nitrogen and condensed water are removed.

## SUMMARY OF THE INVENTION

Opening the purge valve, however, discharges not only nitrogen but also hydrogen. It is necessary, therefore, to properly control the flow rate of a gas to be discharged from the purge valve to effectively use hydrogen and improve fuel economy.

The first aspect of the present invention provides a fuel cell system having: a fuel cell stack having a fuel electrode and an oxidant electrode that face each other with a electrolyte membrane interposed between the fuel electrode and the oxidant electrode; a gas supply unit configured to supply a fuel gas to the fuel electrode and an oxidant gas to the oxidant electrode; a fuel gas circulation unit configured to return a fuel gas discharged from an outlet of the fuel electrode to an inlet of the fuel electrode; a purge valve configured to discharge a gas outside from a circulation path connected between the outlet and the inlet of the fuel electrode; a temperature measuring unit configured to measure a temperature of the fuel gas; and a control unit configured to control, according to the temperature of the fuel gas and a variation in the fuel gas temperature, a flow rate of the gas to be discharged from the purge valve, wherein the control unit increases the flow rate of the gas to be discharged if the variation in the fuel gas temperature is positive and decreases the flow rate of the gas to be discharged if the variation in the fuel gas temperature is negative.

The second aspect of the present invention provides a method of controlling a fuel cell system that has a fuel cell stack having a fuel electrode and an oxidant electrode that face each other with a electrolyte membrane interposed between the fuel electrode and the oxidant electrode. The method include; supplying a fuel gas to the fuel electrode and an oxidant gas to the oxidant electrode; returning a fuel gas discharged from an outlet of the fuel electrode to an inlet of the fuel electrode; discharging a gas outside from a circulation path connected between the outlet and the inlet of the fuel electrode; measuring a temperature of the fuel gas; increasing a flow rate of the gas to be discharged outside if a variation in the fuel gas temperature is positive; and decreasing the flow rate of the gas to be discharged outside if the variation in the fuel gas temperature is negative.

## BRIEF DESCRIPTION OF THE DRAWINGS

Figure 1 is a block diagram showing a fuel cell system according to an embodiment of the present invention;
Fig. 2 is a flowchart showing a procedure for controlling the fuel cell system of Fig. 1;
Fig. 3 is a flowchart showing the details of step S4 of the procedure shown in Fig. 2;
Fig. 4 is a graph showing a relationship between an upper limit of impurity gas concentration in a fuel gas discharged from an outlet of a fuel electrode and the temperature of the fuel gas;
Fig. 5 is a graph showing a relationship between the temperature of a fuel gas and a required purge rate;
Fig. 6 is a graph showing a correction ratio for a purge rate with respect to an accelerator opening variation $\Delta APS$ and a fuel gas temperature variation $\Delta T$;
Fig. 7 is a graph showing a purge valve open time with respect to a fuel gas pressure and a required purge rate;
Fig. 8 is a graph showing a purge valve opening with respect to a fuel gas pressure and a required purge rate;
Fig. 9 is a graph showing changes in an impurity gas concentration and changes in the temperature of a fuel gas; and
Fig. 10 is a block diagram showing a fuel cell system according to a modification of the embodiment shown in Fig. 1.

## DETAILED DESCRIPTION OF THE PREFERRED EMBODIMENTS

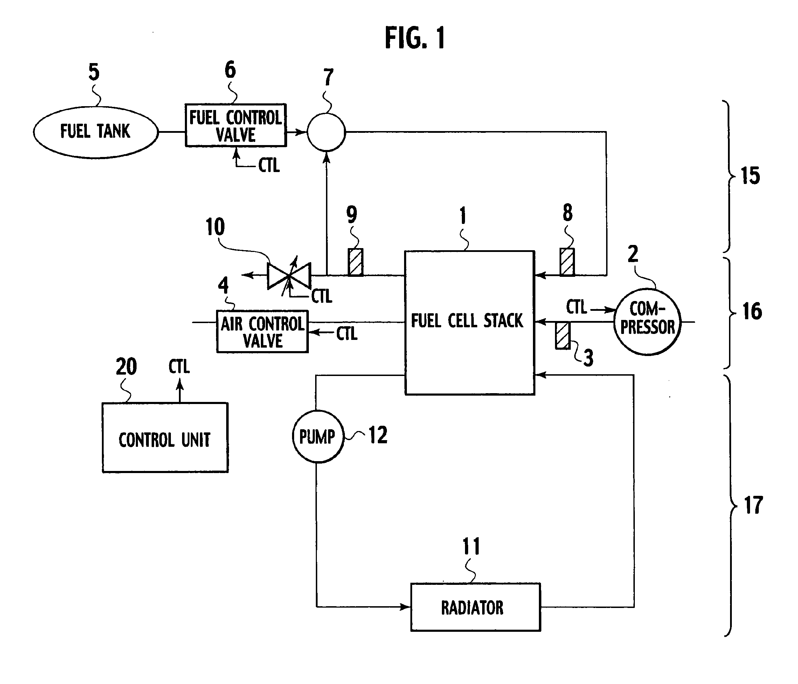

Figure 1 shows a fuel cell system according to an embodiment of the present invention. Components of the fuel cell system will be explained. A fuel cell stack 1 includes a fuel electrode and an oxidant electrode that face each other with an electrolyte membrane interposed between the fuel electrode and the oxidant electrode. A gas supply unit (2) supplies an oxidant gas containing oxygen to the oxidant electrode, and a gas supply unit (5) supplies a fuel gas containing hydrogen to the fuel electrode. A fuel gas circulation unit returns a fuel gas discharged from an outlet of the fuel electrode to an inlet of the fuel electrode. A purge valve 10 discharges a fuel gas outside from a circulation path that is arranged between the outlet and inlet of the fuel electrode. A temperature measuring unit (such as a temperature sensor 9) measures the temperature of a fuel gas in the circulation path. A control unit 20 controls the flow rate of a gas discharged from the purge valve 10 according to a fuel gas temperature and a variation in the fuel gas temperature. The gas supply unit (2) includes a compressor 2 to compress and supply air to the oxidant electrode, and the gas supply unit (5) includes a fuel tank 5 to supply a fuel gas to the fuel electrode.

If the fuel gas temperature variation is positive, i.e., if the fuel gas temperature is increasing, the control unit 20 increases the flow rate of a gas discharged from the purge valve 10. If the fuel gas temperature variation is negative, i.e., if the fuel gas temperature is decreasing, the control unit 20 reduces the flow rate of a gas discharged from the purge valve 10. The control unit 20 outputs a control signal CTL to control an open time Topen and a close time Tclose of the purge valve 10, thereby controlling the flow rate of a gas discharged from the purge valve 10. To increase the flow rate of a purged gas, the control unit 20 fixed the open time Topen of the purge vale 10 and shortens the close time Tclose of the purge valve 10. Alternatively, the control unit 20 may fix the close time Tclose and extend the open time Topen when increasing the flow rate of a purged gas.

The fuel cell system shown in Fig. 1 may be a vehicle fuel cell system that uses electricity generated by the fuel cell stack 1 to drive a vehicle. In this case, electricity to be generated by the fuel cell stack 1 is controlled according to an accelerator opening of the vehicle. Namely, the control unit 20 adjusts the flow rate of a gas discharged from the purge valve 10 according to an accelerator pedal operation of the vehicle.

The fuel cell stack 1 is connected to the piping and components of a fuel system 15, an air system 16, and a water circulation system 17.

The fuel system 15 includes, from the upstream side thereof, the fuel tank 5 for storing a fuel gas containing hydrogen, a fuel control valve 6 for adjusting the pressure of a fuel gas supplied from the fuel tank 5, an ejector 7 serving as a fuel gas circulation unit to mix a fuel gas discharged from the outlet of the fuel electrode with the fuel gas supplied from the fuel tank 5, a fuel pressure sensor 8 for measuring the pressure of a fuel gas at the inlet of the fuel electrode, the temperature sensor 9 for measuring the temperature of a fuel gas at the outlet of the fuel electrode, and the purge valve 10 for discharging an impurity gas containing nitrogen from the fuel gas circulation unit. The fuel gas circulation unit may employ, instead of the ejector 7, a circulation pump.

The air system 16 includes, from the upstream side thereof, the compressor 2 for pressurizing and feeding air and an air pressure sensor 3 for measuring the pressure of air at the inlet of the fuel cell. On the downstream side of the air system 16, there is an air control valve 4 for adjusting an air pressure.

The water circulation system 17 includes a radiator 11 provided with an electric fan, and a pump 12 whose driving speed is continuously adjustable. There is a sensor (not shown) for detecting a power generation state of the fuel cell stack 1. According to the power generation state, the control unit 20 outputs the control signal CTL to the fuel control valve 6 for adjusting a hydrogen pressure, the air control valve 4 for adjusting an air pressure, and the compressor 2 for adjusting an air flow rate.

Hydrogen is supplied from the fuel tank 5 to the fuel electrode, and oxygen in the atmosphere is supplied from the compressor 2 to the oxidant electrode. The hydrogen and oxygen electrochemically react with each other in the fuel cell stack 1, to directly generate electricity. This reaction also generates heat, which is cooled with a coolant circulated through the water circulation system 17.

The fuel system 15 employs the ejector 7 or a circulation pump to circulate and reuse a fuel gas that has not contributed to the electrochemical reaction, thereby improving fuel economy. The recycled fuel gas, however, contains impurities such as nitrogen transmitted from the oxidant electrode. The nitrogen reduces a partial pressure of hydrogen in the fuel gas because the molecular weight of nitrogen is greater than that of hydrogen. The partial pressure of hydrogen in the fuel gas also decreases as the temperature of the fuel gas increases because the temperature rise triggers an increase of a partial pressure of vapor in the fuel gas. These factors decrease a flow rate of hydrogen at the ejector 7. To cope with this problem, the purge valve 10 is opened to drop a nitrogen concentration and increase the partial pressure of hydrogen in the fuel system 15.

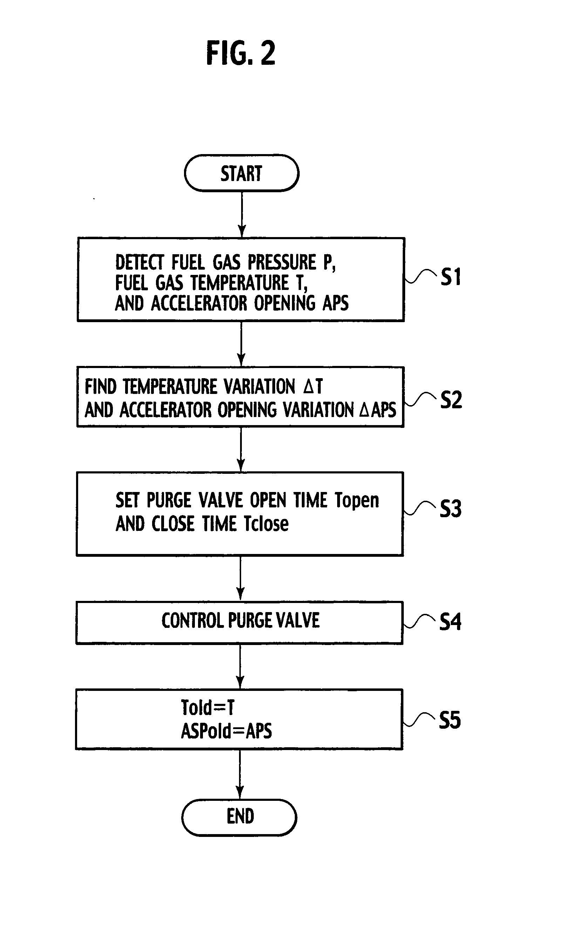

A procedure for controlling the fuel cell system of Fig. 1 will be explained with reference to Fig. 2.

    (1) In step S1, the fuel pressure sensor 8 is used to detect a fuel gas operating pressure P, and the temperature sensor 9 is used to detect a fuel gas temperature T. Also, an accelerator opening APS of the vehicle is detected.

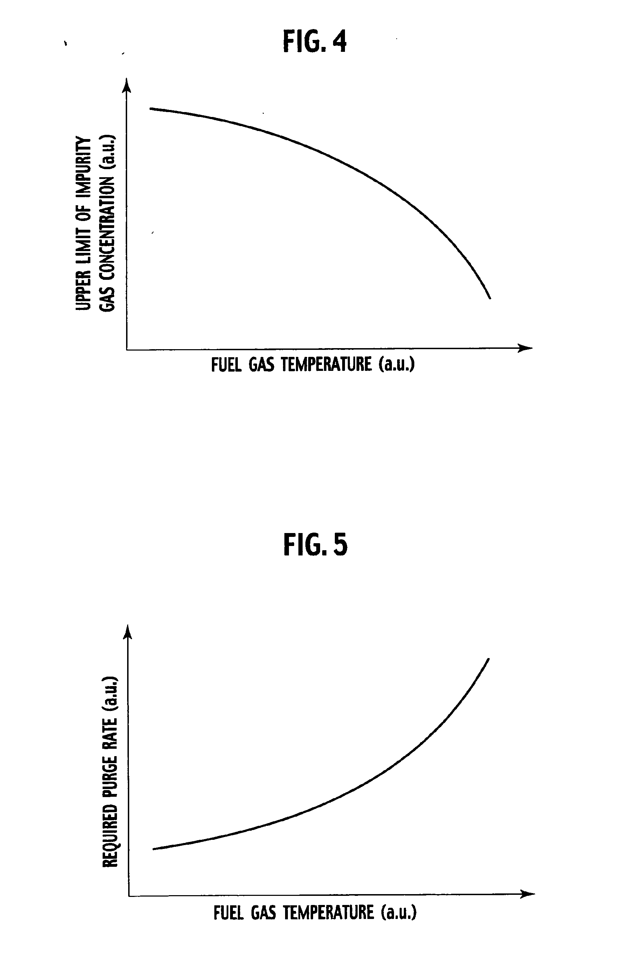

    (2) In step S2, the detected fuel gas temperature T is compared with a previous fuel gas temperature Told, to provide a fuel gas temperature variation $\Delta T$. Also, the detected accelerator opening APS is compared with a previous accelerator opening APSold, to provide an accelerator opening variation $\Delta APS$. (3) In step S3, an open time Topen and a close time Tclose are set for the purge valve 10. If the fuel gas pressure is unchanged and if the fuel gas temperature T increases, an upper limit of impurity gas concentration in the fuel gas discharged from the outlet of the fuel electrode decreases as shown in Fig. 4, and the quantity of nitrogen transmitted from the oxidant electrode increases as shown in Fig. 5. Accordingly, it is necessary to increase the discharge quantity of impurities such as nitrogen according to an increase in the fuel gas temperature T. Namely, a purge rate must be increased as the fuel gas temperature T increases. An increase in the fuel gas temperature T indicates an increase in the temperature of the fuel cell stack 1. Namely, the fuel gas temperature T is dependent on the temperature of the fuel cell stack 1.

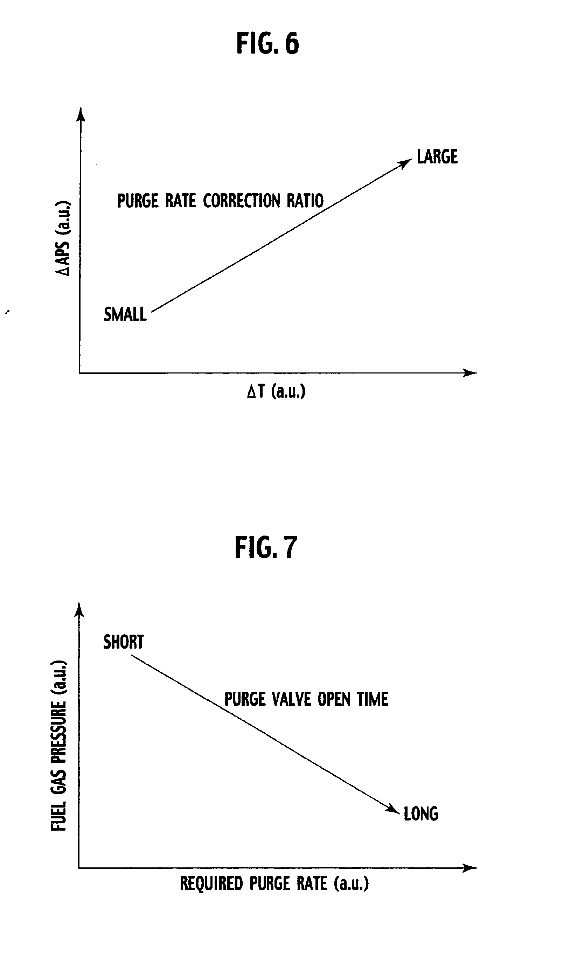

The relationships shown in Figs. 4 and 5 are provided when the fuel gas temperature T stably changes. If the fuel gas temperature steeply increases or decreases in a transient state, the purge rate adjustment mentioned above will not be satisfactory for the upper limit of impurity gas concentration that drastically decreases according to the temperature change and the fuel gas will improperly be circulated. To cope with this problem, the purge rate is corrected according to the accelerator opening variation $\Delta APS$ and fuel gas temperature variation $\Delta T$ as shown in Fig. 6. If a large increase is detected in the accelerator opening, it is expected that large power is taken out of the fuel cell stack 1 to increase heat generation in the fuel cell stack 1, thus increasing the fuel gas temperature T. In this case, the purge rate is increased to decrease the impurity (nitrogen) concentration in the fuel gas circulation path. Also, if a rapid increase in the fuel gas temperature T is observed, the purge rate is increased to drop the impurity concentration in the fuel gas circulation path. According to the purge rate determined from the relationships of Figs. 5 and 6 and according to the relationship of Fig. 7, a purge valve open time Topen is determined. A purge valve close time Tclose is determined as follows when a purge period a is fixed, i.e., when the purge period a is equal to the open time plus the close time:

$$Tclose = a - Topen \qquad (1)$$

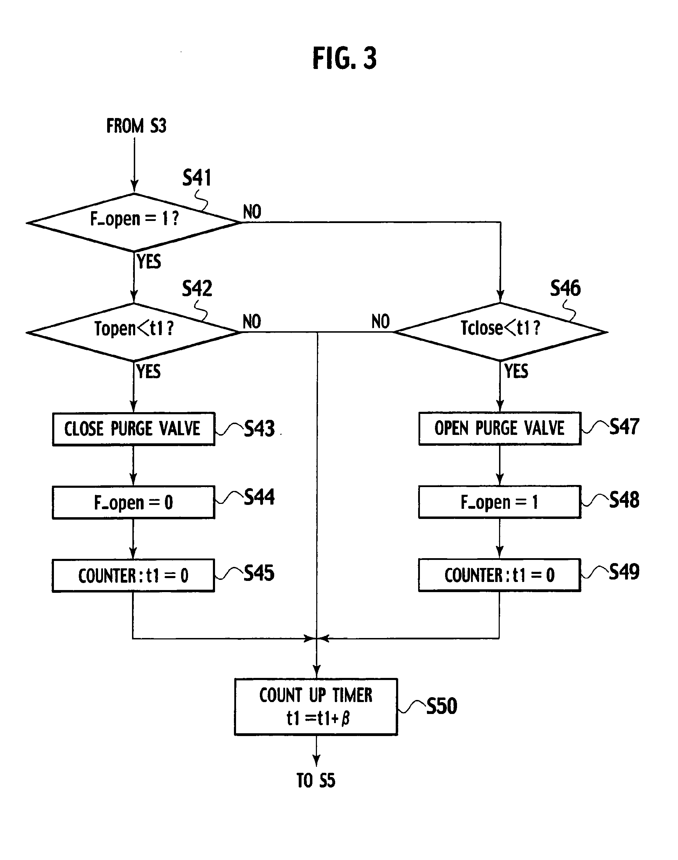

(4) In step S4, the purge valve 10 is controlled as shown in the flowchart of Fig. 3 to be explained later. (5) In Step S5, the detected fuel gas temperature T and accelerator opening APS are stored in a memory as old values to be compared with new values to be detected next time.

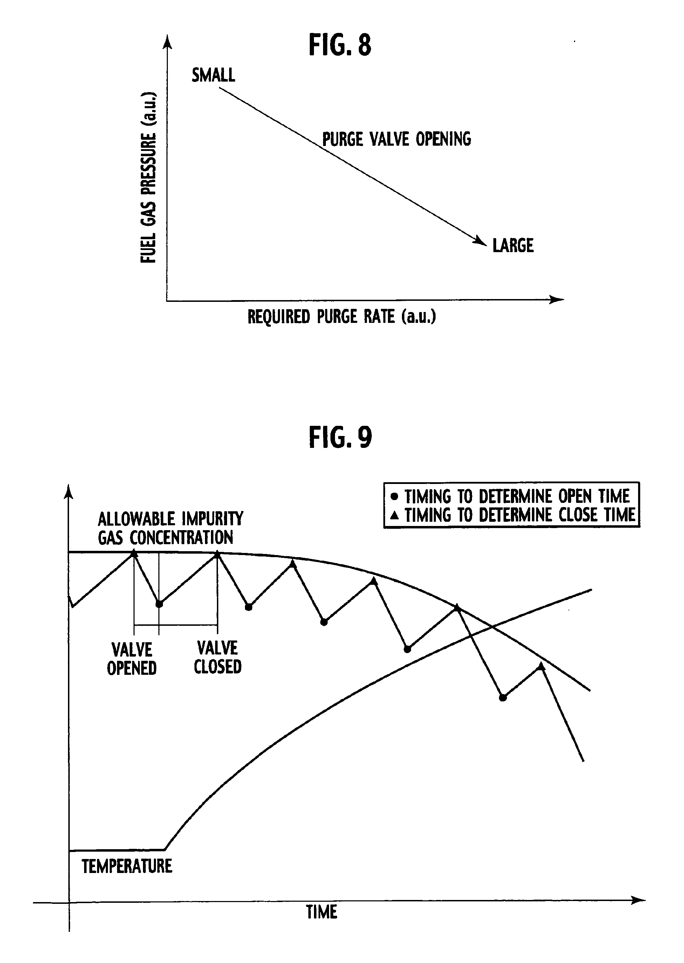

The purge valve 10 may be a duty valve that are opened and closed in response to an ON/OFF operation of a power source. Namely, the duty valve only has two states, i.e., an open state and a closed state. This valve can economically control a purge rate. The present invention is not limited to such a valve. Instead of the duty valve, the present invention may employ, for example, a solenoid valve that is capable of controlling a purge rate according to an opening ratio of the valve. In this case, the graph of Fig. 8 showing the opening of the purge valve 10 is used instead of the graph of Fig. 7.
It is also possible to fix one of the open time and close time of the purge valve 10 and change the other to secure a required purge rate.
The details of step S4 of Fig. 2 will be explained with reference to Fig. 3.

(a) In step S41, a flag is checked to see if the purge valve 10 is open or closed. If the purge valve 10 is open, step S42 is carried out, and if it is closed, step S46 is carried out.
(b) In step S42, an open time Topen for the purge valve 10 is compared with a counter value t1. If the counter value t1 is greater than the open time Topen, i.e., if Yes in step S42, it is determined that the open time has elapsed and step S43 is carried out. The open time Topen is dependent on the fuel gas temperature. For example, if the fuel gas temperature increases after the purge valve 10 is opened, the open time Topen will be extended. On the contrary, if the fuel gas temperature decreases after opening the purge valve 10, the open time Topen is shortened. In this way, the purge rate is corrected as and when needed. If the open time Topen is equal to or greater than the counter value t1, i.e., if No in step S42, step S50 is carried out.
(c) In step S43, the purge valve 10 is closed because the open time Topen has elapsed. In step S44, the flag is changed to indicate the closed state of the purge valve 10 (F_open = 0). In step S45, the counter value t1 is cleared.
(d) If the purge valve is closed (No in step S41), step S46 compares a close time Tclose for the purge valve 10 with a counter value t1. If the counter value t1 is greater than the close time Tclose (Yes in step S46), it is determined that the close time has elapsed and step S47 is carried out. The close time Tclose is dependent on, for example, the fuel gas temperature. For example, if the fuel gas temperature increases after the purge valve 10 is closed, the close time Tclose will be shortened. On the contrary, if the fuel gas temperature decreases after the closure of the purge valve 10, the close time Tclose will be extended. In this way, the purge rate can be corrected as and when needed. If the close time Tclose is equal to or greater than the counter value t1 (No in step S46), step S50 is carried out.

(e) In step S47, the purge valve 10 is opened because the close time Tclose has elapsed. In step S48, the flag is changed to indicate that the purge vale 10 is open (F_open = 1). In step S49, the counter value t1 is cleared.

(f) In step S50, a timer is counted up based on a logic period".

As shown in Fig. 9, an allowable impurity gas concentration decreases if the fuel gas temperature increases as time passes. As the allowable impurity gas concentration decreases, the open time Topen of the purge valve 10 is extended with the close time Tclose of the purge valve 10 kept constant, to secure a necessary purge rate and reduce the impurity gas concentration.

As explained above, a nitrogen concentration allowable in the fuel gas circulation unit and circulation path varies depending on the temperature and pressure of a fuel gas in the hydrogen circulation system. Accordingly, the embodiment optimizes the nitrogen concentration according to the temperature and pressure of the fuel gas, thereby reducing the quantity of a hydrogen gas to be discharged without reaction and improving fuel economy.

The embodiment detects the temperature increase/decrease, pressure increase/decrease, and operating conditions of the fuel cell stack 1, and according to the detected result, changes a purge time to maintain a proper nitrogen concentration that allows a proper circulation of hydrogen. This results in reducing the quantity of hydrogen to be purged and improving fuel economy.

As the temperature of the fuel cell system increases, an allowable nitrogen concentration in the circulation path decreases. Accordingly, the embodiment increases a purge rate to control the nitrogen concentration in the circulation path to a level at which a proper circulation of hydrogen is secured. As the temperature of the fuel cell system drops, an allowable nitrogen concentration in the circulation path increases. In this case, the embodiment reduces a purge rate to increase a nitrogen concentration in the circulation path so that hydrogen is properly circulated.

The operating conditions of the fuel cell system and the temperature of a fuel gas determine the opening of the purge valve 10. If the fuel gas temperature positively increases, a correction quantity for the open time of the purge valve 10 is increased. If the fuel gas temperature decreases, the correction quantity is decreased. With this control, the embodiment quickly drops an impurity gas concentration in the circulation path when the fuel gas temperature increases. As a result, the embodiment can secure a proper circulation of a fuel gas, to maintain the operation efficiency of the fuel cell and prevent the deterioration of the fuel cell due to a fuel gas shortage.

When the temperature of the fuel cell system changes, in particular, when the temperature of the fuel cell system increases, the embodiment controls the purge valve 10 according to a temperature variation ratio. During a normal operation, the embodiment properly increases an impurity gas concentration in the circulation path, to reduce the quantity of hydrogen to be purged, thereby improving fuel economy.

The embodiment estimates an operating state of the fuel cell stack 1 according to the position and change of an accelerator pedal, and according to the estimation, corrects the open/close control of the purge valve 10 for controlling an impurity gas concentration in the circulation path. The embodiment estimates a change in the operating condition of the fuel cell stack 1, to estimate a change in the temperature of a fuel gas. According to the estimated temperature change, the embodiment controls an impurity gas concentration in the circulation path. Consequently, the embodiment can secure a proper circulation of a fuel gas even when the fuel gas temperature is increasing, keep the efficiency of the fuel cell, and prevent the deterioration of the fuel cell due to a fuel gas shortage.

To increase a purge rate, the embodiment fixes the open time Topen of the purge valve 10 and shortens the close time Tclose of the purge valve 10. This results in reducing the driving frequency of the purge valve 10 in a normal operation to improve the service lives of parts.

The embodiment may employ, for example, a solenoid valve as the purge valve 10, to precisely control a purge rate by controlling the opening ratio of the solenoid valve.

(Modification)

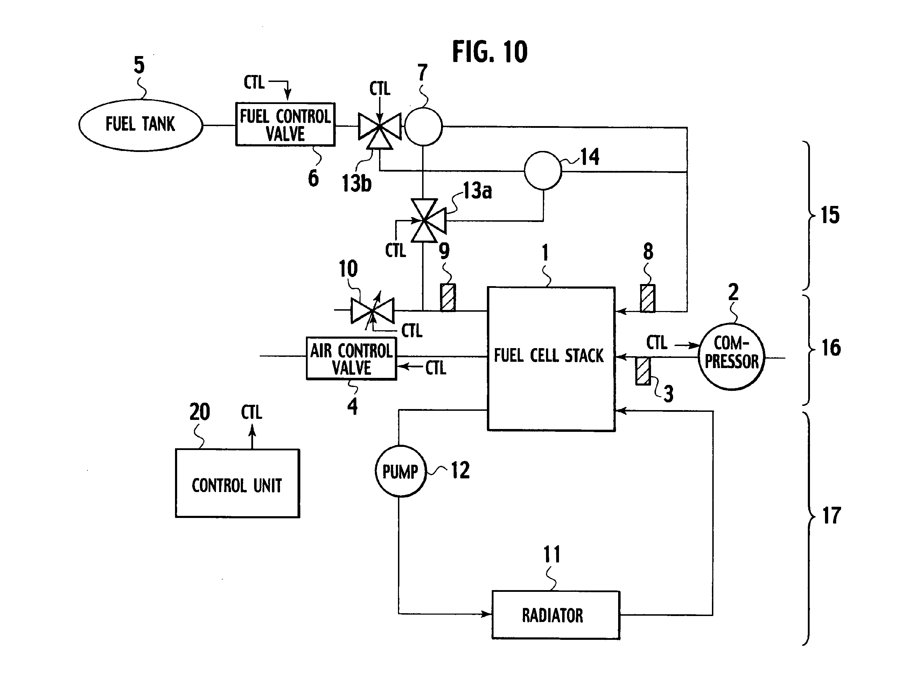

Figure 10 shows a fuel cell system according to a modification of the above-mentioned embodiment. The modification includes a plurality of fuel gas circulation units and circulation paths. Only the difference of the modification from the fuel cell system of Fig. 1 will be explained.

The fuel cell system according to the modification includes two ejectors 7 and 14, two circulation paths connected to the ejectors 7 and 14, respectively, and two three-way valves 13a and 13b to switch the two circulation paths from one to another. A control unit 20 switches the two circulation paths from one to another according to, for example, the operating conditions of the fuel cell stack 1. For example, for a low output operation, the control unit 20 selects the ejector 7, and for a high output operation, the ejector 14. Although the modification employs two circulation systems that are switched from one to another, the present invention is not limited to this. For example, the present invention may employ three or more circulation systems that are switched from one to another.

The modification of Fig. 10 prepares a map like that of Fig. 7 for each of the fuel gas circulation units and circulation paths. The control unit 20 selects a proper one of the maps according to the fuel gas circulation unit and circulation path that are presently used.

The other arrangements of the modification are the same as those of the fuel cell system of Fig. 1, and therefore, are not explained again.

The modification switches the fuel gas circulation units and circulation paths from one to another according to the operating conditions of the fuel cell system, and the control unit 20 controls an impurity gas concentration in a given circulation path according to the capacity thereof. Namely, the modification properly controls an impurity gas concentration in a given circulation path by controlling the purge valve 10 according to the capacity of the given circulation path, thereby securing a high circulation performance. The modification is capable of properly control an impurity gas concentration and reducing the quantity of hydrogen to be purged, thereby improving fuel economy.

The entire content of a Patent Application No. TOKUGAN 2004-172399 with a filing date of June 10, 2004 in Japan is hereby incorporated by reference.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

## Claims

**1.** A fuel cell system comprising:

a fuel cell stack(1) having a fuel electrode and an oxidant electrode that face each other with a electrolyte membrane interposed between the fuel electrode and the oxidant electrode;
a gas supply unit(5,6) configured to supply a fuel gas to the fuel electrode and an oxidant gas to the oxidant electrode;
a fuel gas circulation unit(7) configured to return a fuel gas discharged from an outlet of the fuel electrode to an inlet of the fuel electrode;
a purge valve(10) configured to discharge a gas outside from a circulation path connected between the outlet and the inlet of the fuel electrode;
a temperature measuring unit(9) configured to measure a temperature of the fuel gas; and
a control unit(20) configured to control, according to the temperature of the fuel gas and a variation in the fuel gas temperature, a flow rate of the gas to be discharged from the purge valve (10),
the control unit(20) increasing the flow rate of the gas to be discharged if the variation in the fuel gas temperature is positive and decreases the flow rate of the gas to be discharged if the variation in the fuel gas temperature is negative.

**2.** The fuel cell system of claim 1, wherein:

electricity generated by the fuel cell stack(1) is consumed as force to drive a vehicle; and
the control unit(20) corrects the flow rate of the gas to be discharged according to a variation in an accelerator pedal operation of the vehicle.

**3.** The fuel cell system of claims 1 or 2, wherein:

the control unit(20) controls the flow rate of the gas to be discharged by adjusting an open/close time of the purge valve(10).

**4.** The fuel cell system of claim 3, wherein:

increasing the flow rate of the gas to be discharged is achieved by fixing an open time of the purge valve(10) and shortening a close time of the purge valve(10).

**5.** The fuel cell system of one of claims 1 to 4, wherein:

the control unit(20) controls the flow rate of the gas to be discharged by adjusting the degree of opening of the purge valve(10).

**6.** A fuel cell system comprising:

a fuel cell stack(1) having a fuel electrode and an oxidant electrode that face each other with a electrolyte membrane interposed between the fuel electrode and the oxidant electrode;
a gas supply unit(5,6) configured to supply a fuel gas to the fuel electrode and an oxidant gas to the oxidant electrode;
a fuel gas circulation unit(7) configured to return a fuel gas discharged from an outlet of the fuel electrode to an inlet of the fuel electrode;
a purge valve(10) configured to discharge a gas outside from a circulation path connected between the outlet and the inlet of the fuel electrode;
a temperature measuring unit(9) configured to measure a temperature of the fuel gas; and
means for increasing a flow rate of the gas to be discharged form the purge valve(10) if a variation in the fuel gas temperature is positive; and
means for decreasing the flow rate of the gas to be discharged if the variation in the fuel gas temperature is negative.

**7.** A method of controlling a fuel cell system having a fuel cell stack(1) that has a fuel electrode and an oxidant electrode that face each other with a electrolyte membrane interposed between the fuel electrode and the oxidant electrode, the method comprising:

supplying a fuel gas to the fuel electrode and an oxidant gas to the oxidant electrode;
returning a fuel gas discharged from an outlet of the fuel electrode to an inlet of the fuel electrode;
discharging a gas outside from a circulation path connected between the outlet and the inlet of the fuel electrode;
measuring a temperature of the fuel gas;
increasing a flow rate of the gas to be discharged outside if a variation in the fuel gas temperature is positive; and
decreasing the flow rate of the gas to be discharged outside if the variation in the fuel gas temperature is negative.

**FIG. 1**

EP 1 605 539 A2

# FIG. 2

```
           ┌─────────────┐
           │    START    │
           └──────┬──────┘
                  │
                  ▼
   ┌──────────────────────────────┐
   │ DETECT FUEL GAS PRESSURE P,   │
   │ FUEL GAS TEMPERATURE T,        │ ～ S1
   │ AND ACCELERATOR OPENING APS   │
   └──────────────┬────────────────┘
                  │
                  ▼
   ┌──────────────────────────────┐
   │ FIND TEMPERATURE VARIATION ΔT │ ～ S2
   │ AND ACCELERATOR OPENING VARIATION ΔAPS │
   └──────────────┬────────────────┘
                  │
                  ▼
   ┌──────────────────────────────┐
   │ SET PURGE VALVE OPEN TIME Topen│ ～ S3
   │ AND CLOSE TIME Tclose          │
   └──────────────┬────────────────┘
                  │
                  ▼
   ┌──────────────────────────────┐
   │     CONTROL PURGE VALVE        │ ～ S4
   └──────────────┬────────────────┘
                  │
                  ▼
   ┌──────────────────────────────┐
   │ Told=T                         │ ～ S5
   │ ASPold=APS                     │
   └──────────────┬────────────────┘
                  │
                  ▼
           ┌─────────────┐
           │     END     │
           └─────────────┘
```

# FIG. 3

FROM S3

S41

F_open = 1 ? — NO →

YES ↓

S42

Topen < t1 ? — NO → — NO — Tclose < t1 ? S46

YES ↓ YES ↓

| CLOSE PURGE VALVE | S43 |

| OPEN PURGE VALVE | S47 |

| F_open = 0 | S44 |

| F_open = 1 | S48 |

| COUNTER : t1 = 0 | S45 |

| COUNTER : t1 = 0 | S49 |

| COUNT UP TIMER $t1 = t1 + \beta$ | S50 |

TO S5

# FIG. 4

UPPER LIMIT OF IMPURITY GAS CONCENTRATION (a.u.)

FUEL GAS TEMPERATURE (a.u.)

# FIG. 5

REQUIRED PURGE RATE (a.u.)

FUEL GAS TEMPERATURE (a.u.)

# FIG. 6

FIG. 6 — Graph: vertical axis ΔAPS (a.u.), horizontal axis ΔT (a.u.). Line labeled PURGE RATE CORRECTION RATIO from SMALL to LARGE.

# FIG. 7

FIG. 7 — Graph: vertical axis FUEL GAS PRESSURE (a.u.), horizontal axis REQUIRED PURGE RATE (a.u.). Line labeled PURGE VALVE OPEN TIME from SHORT to LONG.

12

# FIG. 8

FUEL GAS PRESSURE (a.u.)

SMALL

PURGE VALVE OPENING

LARGE

REQUIRED PURGE RATE (a.u.)

# FIG. 9

ALLOWABLE IMPURITY
GAS CONCENTRATION

● TIMING TO DETERMINE OPEN TIME
▲ TIMING TO DETERMINE CLOSE TIME

VALVE
OPENED

VALVE
CLOSED

TEMPERATURE

TIME

13

# FIG. 10

EP 1 605 539 A2